# EUROPEAN PATENT APPLICATION

(11) **EP 4 752 772 A1**
(43) Date of publication of application: **03.06.2026**
(21) Application number: 25218484.1
(22) Date of filing: 25.11.2025
(51) Int. Cl.: G06F 21/62, G06F 21/55, H04L 9/40

(54) **CONTENT DETECTION FOR ENCRYPTED ARCHIVE FILE**

(30) Priority: 02.12.2024 US 202418965688
(71) Applicant: CrowdStrike Inc., Sunnyvale, CA 94086 (US)
(72) Inventor: KAMA, Avraham, Beer Yaakov (IL); LEVETT, Peter, Kenthurst (AU); RABA, Dror, Tel Aviv (IL); ZUCKERMAN, Ori, Nir Banim (IL); EISENBERG, Shai, Petah Tikva (IL)
(74) Representative: Murgitroyd & Company

(57) **Abstract**

A security agent executing on a computing system may determine when an encryption process, configured to generate an encrypted archive file containing one or more files, is initiated on the computing system. The security agent may identify files accessed by the encryption process during generation of the encrypted archive file, and may generate corresponding archive content data indicating content of the files accessed by the encryption process and that are likely included within the encrypted archive file. The security agent may apply policies to operations associated with the encrypted archive file by using the archive content data to determine contents of the encrypted archive file, without decrypting the encrypted archive file.

## Description

### BACKGROUND

Digital security exploits that steal or destroy resources, data, and private information on computing devices are an increasing problem. Such security threats come in many forms, including malicious actors and malicious elements such as computer viruses, worms, trojan horses, spyware, keystroke loggers, adware, and rootkits.

Some security threats may be associated with exfiltration of sensitive data from computing systems. For example, a security threat may be associated with an accidental or malicious transfer of sensitive data from a computing system to another computing system or other destination.

### SUMMARY

Accordingly there is provided a method, a computing system, and a computer program as detailed in the claims that follow.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 shows an example of security agent that is configured to identify contents of an encrypted archive file during generation of the encrypted archive file on a computing system.
FIG. 2 shows a flowchart of an example process for determining archive content data associated with an encrypted archive file.
FIG. 3 shows a flowchart of an example process for applying a policy to an encrypted archive file via the security agent.
FIG. 4 shows an example system architecture for the computing system that executes the security agent.

### DETAILED DESCRIPTION

An entity, such as a company or other organization, may have computing systems that store files containing sensitive data. Sensitive data may include customer information, financial information, personally identifiable information (PII), and/or other types of sensitive information.

In some cases, attempts may be made to exfiltrate sensitive data from the entity's computing systems, with or without malicious intent. For instance, a user of one of the entity's computing systems may, intentionally or unintentionally, attempt to transfer one or more files containing sensitive data from that computing system to a different computing system that is not associated with the entity. As an example, the user may attempt to send a file to an external email address outside the entity without being aware that the file contains sensitive data that should not be disseminated outside the entity. As another example, the user may know that a file contains sensitive data that should not be disseminated outside the entity, but may maliciously attempt to exfiltrate the sensitive data by transferring the file to a different computing system, a removable storage device, or other destination. Similarly, malware or another process executing on the computing system may attempt to transfer a file containing sensitive data to a different computing system, such as another computing system that is not associated with the entity.

The entity may use Data Loss Prevention (DLP) systems and techniques to detect when attempts are made to exfiltrate sensitive data from the entity's computing system, and/or to perform one or more actions in response to such attempts to exfiltrate sensitive data. When an attempt is made to transfer a file from a computing system, a security agent executing on the computing system may examine the file to determine whether the file contains sensitive data. Accordingly, the security agent may apply a policy, based on whether the file contains sensitive data, to determine whether the security agent should allow the file transfer, block the file transfer to prevent exfiltration of sensitive data, or perform another responsive action.

For instance, in some examples a security agent may be configured to block egress of a file containing sensitive data from the computing system in order to prevent exfiltration of the sensitive data. In other examples the security agent may be configured to allow egress of a file containing sensitive data in this situation, but may log corresponding information such as an identifier of which user or process initiated the egress of the file, an identifier of the file, a time of the file egress, a destination to which the file was transferred, and/or other information that may later assist with a potential investigation or audit regarding exfiltration of the sensitive data.

However, if the file being transferred is an encrypted archive file, the security agent may not be able to decrypt the encrypted archive file in order to determine whether the encrypted archive file contains sensitive data. For instance, the security agent may not have access to a decryption password that could be used to decrypt the encrypted archive file, and/or may not be configured to use brute force methods or other techniques to attempt to decrypt the encrypted archive file. Accordingly, if one or more files containing sensitive data are bundled into an archive file, and the archive file is encrypted, a security agent may thereafter be unable to decrypt the encrypted archive file in order to determine whether contents of the archive file include sensitive data, and/or whether a policy associated with exfiltration of sensitive data should be applied when attempts are made to transfer the encrypted archive file.

Described herein are systems and methods that allow a security agent executing on a computing system to identify contents of an encrypted archive file during initial generation of the encrypted archive file on the computing system. When an attempt is later made to transfer the encrypted archive file from the computing system, the security agent may use the previously-determined information about the contents of the encrypted archive file, rather than attempting to decrypt the encrypted archive file in order to determine the contents of the encrypted archive file. Accordingly, the security agent may use the previously-determined information about the contents of the encrypted archive file to determine whether the encrypted archive file contains sensitive data, and/or whether the security agent should apply a policy associated with such sensitive data, without decrypting the encrypted archive file.

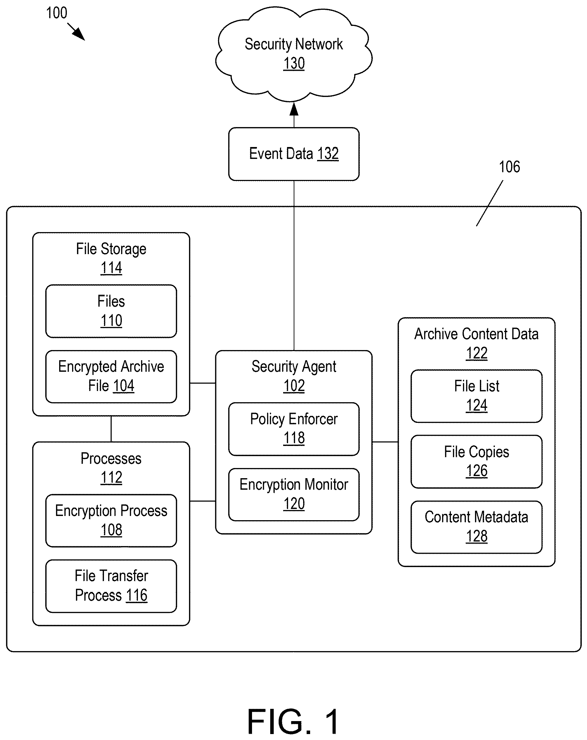

FIG. 1 shows an example 100 of security agent 102 that is configured to identify contents of an encrypted archive file 104 during generation of the encrypted archive file 104 on a computing system 106. The security agent 102 may execute on the computing system 106, and may determine when an encryption process 108 executing on the computing system 106 begins to generate the encrypted archive file 104. The security agent 102 may identify one or more files 110 that the encryption process 108 accesses during generation of the encrypted archive file 104. The security agent 102 may also access those files 110 directly to identify contents that the encryption process 108 has included in the encrypted archive file 104, without decrypting the encrypted archive file 104 itself. The security agent 102 may accordingly perform security operations based on the identified contents of the encrypted archive file 104, without decrypting the encrypted archive file 104.

The computing system 106 may be a physical computing system or a virtual computing system. For example, the computing system 106 may be a computer, a workstation, a mobile computing device, an Internet of Things (IoT) device, a server, a cloud computing resource, a virtual computing element such as a container or a virtual machine, a network element such as a gateway or a firewall, and/or any other type of computing device or computing system.

The computing system 106 may execute processes 112, such as software applications, scripts, operating system components, drivers, and/or other computer-executable elements. The computing system 106 may also have file storage 114, such as memory or other data storage elements, that is accessible by processes 112 that execute on the computing system 106.

The file storage 114 may store one or more files 110, such as user files, database files, files associated with operations of processes 112, and/or other types of files. As discussed further below, the encrypted archive file 104 generated by the encryption process 108 may be stored as a file 110 in the file storage 114. In some examples, files 110 stored in the file storage 114 may be organized and/or accessed via a directory structure, folder system, or other organization scheme.

The file storage 114 may be accessible by processes 112 that execute on the computing system 106. For example, the file storage 114 may be a memory location or memory partition of the computing system 106 that is accessible to processes 112, such that processes 112 may access files 110 in the file storage 114, edit files in the file storage 114, delete files in the file storage 114, add new files 110 to the file storage 114, and/or perform other operations associated with files 110 in the file storage 114. The processes 112 that execute on the computing system 106, and that may access and/or use one or more files 110, may include the encryption process 108, a file transfer process 116, and/or other types of processes. The security agent 102 may also be considered to be a process 112 that executes on the computing system 106 and may access files 110 in the file storage 114.

The encryption process 108 may generate the encrypted archive file 104 by accessing one or more files 110 in the file storage 114, bundling and/or compressing the accessed files 110 into a single archive file, and encrypting the archive file. The encryption process 108 may store the generated encrypted archive file 104 in the file storage 114, for instance as a file 110. Archive files, such as the encrypted archive file 104, generated by the encryption process 108 may be .zip files, .tar files, .gz files, .7z files, .rar files, or other types of archive files. The encryption process 108 may be a file archiver such as 7-Zip, WinRAR, WinZIP, or other type of process 112 that may generate and encrypt an archive file. In some examples, a user of the computing system 106, another process 112, predefined information stored in a script or other file 110, or other element may provide instructions to the encryption process 108 identifying which files 110 are to be included in the encrypted archive file 104 that the encryption process 108 generates, identifying a type of archive file the encryption process 108 is to use to generate the encrypted archive file 104, identifying a password the encryption process 108 is to use to encrypt the encrypted archive file 104, and/or identifying other parameters to be used by the encryption process 108 during generation of the encrypted archive file 104.

The file transfer process 116 may access one or more files 110 in the file storage 114, and may transfer the accessed files 110 to a different computing system 106, to a removable storage device connected to the computing system 106, to a network location remote from the computing system 106, or to any other destination. The file transfer process 116 may be a File Transfer Protocol (FTP) client, an operating system component, an email application, a messaging application, a malicious application, or any other process 112 that may transfer files 110 to destinations separate and/or remote from the computing system 106. In some examples, a user of the computing system 106, another process 112, predefined information stored in a script or other file 110, or other element may provide instructions to the file transfer process 116 identifying which files 110 are to be transferred during a file transfer operation, identifying a destination to which those files 110 are to be transferred during the file transfer operation, and/or indicating other parameters of the file transfer operation. As discussed further below, in some situations the file transfer process 116 may attempt to transfer the encrypted archive file 104 from the computing system 106.

The security agent 102 may also be a process 112, or another executable element, that executes on the computing system 106. The security agent 102 may be configured to monitor operations of the computing system 106 and/or events that occur on the computing system 106, for instance to detect operations and events associated with the encryption process 108, the file transfer process 116, and/or other processes 112. Accordingly, the security agent 102 may detect when other processes 112 are executed, detect when other processes 112 perform one or more types of file operations associated with files 110, and/or detect other events associated with other processes 112 executed on the computing system 106.

As an example, the security agent 102 may execute at a kernel level, and/or as a driver, such that the security agent 102 may hook into, and/or have visibility into, operating system activities, file system activities, and/or other types of activities on the computing system 106. In some examples, the security agent 102 may load at the kernel level at boot time of the computing system 106, before or during loading of an operating system, such that the security agent 102 includes kernel-mode components that execute at the kernel level. In some examples, the security agent 102 may also, or alternately, have components that operate on the computing system 106 in a user mode, such as elements configured to detect or observe user actions and/or user-mode events. Examples of kernel-mode and user-mode components of a security agent 102 are described in greater detail in U.S. Patent Application Number 13/492,672, entitled "Kernel-Level Security Agent" and filed on June 8, 2012, which issued as U.S. Patent Number 9,043,903 on May 26, 2015, and which is hereby incorporated by reference.

The security agent 102 may also perform actions in response to detected events or other conditions. In some examples, the security agent 102 may block operations of an operating system or other processes 112 on the computing system 106, for instance to prevent exfiltration of sensitive data from the computing system 106.

The security agent 102 may accordingly have a policy enforcer 118 that is configured to apply one or more policies based on events, detected by the security agent 102, that have occurred on the computing system 106. The security agent 102 may be configured with one or more policies designed to detect potential exfiltration of sensitive data from the computing system 106, and to perform one or responsive actions such as blocking and/or logging the exfiltration of sensitive data from the computing system 106.

For example, the security agent 102 may detect that the file transfer process 116 is attempting to transfer a particular file 110. The policy enforcer 118 of the security agent 102 may be configured to enforce a policy associated with a particular type of sensitive data, and may determine that contents of the particular file 110 include that particular type of sensitive data. The security agent 102 may take one or more responsive actions indicated by the policy. As an example, the policy may cause the security agent 102 to take action to block the file transfer process 116 from successfully transferring the file 110 off the computing system 106, in order to prevent the exfiltration of the sensitive data contained in the file 110. Alternatively, the policy may cause the security agent 102 to allow the file transfer process 116 to transfer the file 110, but to create a corresponding log entry identifying the file 110 that was transferred, identifying the contents of the file 110 that included the sensitive data corresponding to the policy, and/or identifying other information about the transfer of the file 110.

In some situations the security agent 102 may be configured to directly examine contents of unencrypted files 110, for example by accessing and/or opening the unencrypted files 110, to determine whether the contents of those unencrypted files 110 correspond with any policies being enforced by the policy enforcer 118 of the security agent 102. However, the security agent 102 may be unable to, or may not be configured to, decrypt the encrypted archive file 104 to determine whether contents of the encrypted archive file 104 correspond with any policies being enforced by the policy enforcer 118 of the security agent 102.

For example, the encryption process 108 may encrypt the encrypted archive file 104 based in part on a password provided by a user, another process 112, or other element. A user, process 112, or other element that knows or has a copy of the password may use the password to decrypt the encrypted archive file 104, and then open or access one or more files 110 that had been included within the encrypted archive file 104. The security agent 102 may not have a copy of the password associated with the encrypted archive file 104, and/or may not be configured to use brute force methods and/or other decryption techniques to attempt to decrypt the encrypted archive file 104. Accordingly, the security agent 102 may be unable to, or may not be configured to attempt to, decrypt the encrypted archive file 104 in order to determine whether the encrypted archive file 104 contains content that correspond to any policies being enforced by the policy enforcer 118 of the security agent 102.

However, the security agent 102 may have an encryption monitor 120 that is configured to detect the initial generation of the encrypted archive file 104 by the encryption process 108, to identify one or more files 110 that the encryption process 108 includes in the encrypted archive file 104, and to generate and store separate archive content data 122 that indicates contents of the one or more files 110 that the encryption process 108 includes in the encrypted archive file 104. Thereafter, rather than attempting to decrypt the encrypted archive file 104 itself, the security agent 102 may use the archive content data 122, indicating the previously-determined contents of the encrypted archive file 104, to determine whether the contents of the encrypted archive file 104 correspond to any policies being enforced by the policy enforcer 118 of the security agent 102.

The encryption monitor 120 may be configured with a predefined list of encryption processes 108 that may potentially be executed on the computing system 106. The encryption monitor 120 of the security agent 102 may monitor events on the computing system 106 to determine when one of the encryption processes 108, identified in the predefined list, begins to execute on the computing system 106. For example, the predefined list may indicate filenames, program names, program folders, drivers, registry entries, and/or other information that are associated with a set of known encryption processes 108. The security agent 102 may hook into operating system elements, file system elements, and/or other elements of the computing system 106 that indicate when an encryption process 108 associated with a filename, program name, program folder, driver, registry entry, and/or other information identified on the predefined list is launched, accessed, or executed on the computing system 106.

When the encryption monitor 120 determines that an encryption process 108 on the predefined list has been launched and may begin to generate an encrypted archive file 104, the encryption monitor 120 may monitor file read events on the computing system 106 to identify one or more files 110 in the file storage 114 that are accessed by the encryption process 108. For example, the security agent 102 may hook into operating system elements, file system elements, and/or other elements of the computing system 106 that indicate when the encryption process 108 accesses a file 110, that indicate the identity of a file 110 accessed by the encryption process 108, and/or other information about a file 110 accessed by the encryption process 108.

The encryption monitor 120 may accordingly generate a file list 124 that identifies one or more files 110 that have been accessed by the encryption process 108, and that the encryption process 108 has likely included within the encrypted archive file 104. The file list 124 generated by the encryption monitor 120 may be stored as archive content data 122 associated with the encrypted archive file 104.

In some examples, the encryption monitor 120 may be configured to filter out some defined types of files 110, files 110 in defined locations, and/or other types or categories of files 110, and to omit such filtered-out files 110 from the file list 124. For example, the encryption process 108 may be expected to access specific files 110 or certain types of files 110 during operations to generate any archive file or any encrypted archive file, such as certain drivers, .dll files, program files that control operations of the encryption process 108 itself, and/or other types of files 110. Although the encryption process 108 may access these types of files 110 during generation of the encrypted archive file 104, the encryption process 108 may be unlikely to be accessing these types of files 110 in order to include them within the encrypted archive file 104 that the encryption process 108 is generating. Accordingly, the encryption monitor 120 may be configured to filter out such files 110, and omit them from the file list 124 that identifies files 110 that the encryption process 108 is likely to be including within the encrypted archive file 104. The encryption monitor 120 may instead add other files 110 accessed by the encryption process 108, such as files 110 that the encryption monitor 120 is not configured to filter out, to the file list 124.

The encryption monitor 120 may also determine when the encryption process 108 attempts to perform a file write event on the computing system 106. Such a file write event may indicate a completion of operations, by the encryption process 108, to generate the encrypted archive file 104. When the encryption monitor 120 determines that the encryption process 108 is attempting to perform a file write event, the security agent 102 may cause operating system elements, file system elements, or other elements on the computing system 106 to temporarily pause the file write event. For example, the security agent 102 may prevent a "file close" operation associated with the file write event from being completed on the computing system 106 while the file write event is paused. While the file write event is paused, the encrypted archive file 104 may be at least temporarily written and stored in the file storage 114, but the encryption process 108 and/or an operating system of the computing system 106 may not yet indicate that the encrypted archive file 104 is fully generated and/or usable. For example, when the file write event is paused, a user interface (UI) of the encryption process 108 and/or of an operating system may indicate that the encrypted archive file 104 is not yet ready to be used or accessed.

The security agent 102 may perform one or more operations while the file write event associated with the encrypted archive file 104 is paused. For example, while the file write event associated with the encrypted archive file 104 is paused, the security agent 102 may copy the files 110 identified in the file list 124 to generate corresponding file copies 126. The file copies 126 may be copies of the files 110 that have likely been included in the encrypted archive file 104, and such file copies 126 may remain accessible to the security agent 102 after generation of the encrypted archive file 104 has completed. Accordingly, if a user or process 112 deletes the original files 110 after those files 110 have been included in the encrypted archive file 104, the corresponding file copies 126 may remain accessible to the security agent 102. The file copies 126 generated by the security agent 102 may be stored as archive content data 122 associated with the encrypted archive file 104.

As another example, while the file write event associated with the encrypted archive file 104 is paused, the security agent 102 may generate content metadata 128 associated with the files 110 that were likely included in the encrypted archive file 104. The content metadata 128 generated by the security agent 102 may be stored as archive content data 122 associated with the encrypted archive file 104.

The content metadata 128 may indicate one or more attributes of the content that has likely been included in the encrypted archive file 104. For instance, the security agent 102 may use the file list 124 to identify one or more files 110 that have likely been included in the encrypted archive file 104. The security agent 102 may examine those files 110, or the corresponding file copies 126, to identify contents of the files 110 that have likely been included in the encrypted archive file 104. The security agent 102 may generate corresponding content metadata 128 indicating names of the files 110, filetypes of the files 110, types of sensitive data and/or other types of content expressed within the files 110, origins of the files 110, a number of files 110 included in the encrypted archive file 104, and/or other types of metadata about the likely content of the encrypted archive file 104.

As an example, the security agent 102 may determine that one or more particular types of PII are expressed within the files 110 that are likely to have been included in the encrypted archive file 104. The security agent 102 may identify those particular types of PII in the content metadata 128 that corresponds to the encrypted archive file 104. Accordingly, while the file copies 126 may contain actual instances of PII that are likely to have been included in the encrypted archive file 104, the corresponding content metadata 128 may identify the types of PII that are likely to have been included in the encrypted archive file 104.

Accordingly, the security agent 102 may generate archive content data 122, such as the file list 124, the file copies 126, and/or the content metadata 128, during generation of the encrypted archive file 104 and/or while a file write event associated with the encrypted archive file 104 is paused. The security agent 102 may store the file copies 126 and/or other types of archive content data 122 in a distinct and/or secure memory location that accessible to the security agent 102, but that is not accessible to the encryption process 108 or other processes 112 on the computing system 106. For example, the security agent 102 may store the file copies 126 and/or other archive content data 122 in a distinct memory partition or a trusted execution environment (TEE) that is associated with the security agent 102. Data in such a distinct memory partition or TEE may be accessible and readable by the security agent 102, but may not be accessible and/or readable by the encryption process 108, the other processes 112, or other processes 112 on the computing system 106. Accordingly, while the file copies 126 may be accessible by elements of the security agent 102, such as the policy enforcer 118, other processes 112 on the computing system 106 may not access the file copies 126 and/or may not have information indicating the existence of the file copies 126.

As discussed above, the security agent 102 may perform one or more operations while a file write event associated with the encrypted archive file 104 is paused, for instance to generate at least a portion of the archive content data 122 by generating file copies 126 and/or content metadata 128. After the security agent 102 has performed such operations, the security agent 102 may permit the file write event to resume and complete. For example, the security agent 102 may cause operating system elements, file system elements, or other elements on the computing system 106 to release the pause on the file write event, such that the file write event may be completed and the encryption process 108 and/or an operating system of the computing system 106 may indicate that the encrypted archive file 104 has been generated and/or is usable.

In some examples, the duration of the pause in the file write event, that occurs while the security agent 102 performs operations such as generating file copies 126 and/or content metadata 128, may be relatively brief such that the pause in the file write event may be unlikely to be noticed by a user of the computing system 106. As a non-limiting example, the security agent 102 may temporarily pause the file write event for three seconds while the security agent 102 generates file copies 126, such that a user may not notice the three-second delay or may attribute the three-second delay to operations that the encryption process 108 is performing to generate the encrypted archive file 104. In other examples, the duration of the pause in the file write event caused by the security agent 102 may be less than one second, or may be any shorter or longer period of time.

In some examples, the security agent 102 may determine to not release a pause on the file write event. For example, the policy enforcer 118 may apply a policy to an encrypted archive file 104 while the file write event associated with the encrypted archive file 104 is paused, and may determine that the policy indicates that the encrypted archive file 104 should not be allowed to be generated because one or more types of content defined by the policy were included in the encrypted archive file 104. Accordingly, in this situation, the security agent 102 may delete the encrypted archive file 104 and/or cause the encryption process 108 to be unable to complete generation of the encrypted archive file 104, instead of releasing the pause on the file write event that would allow the encrypted archive file 104 to become accessible and/or usable.

In some examples, the security agent 102 may verify that a file generated by the encryption process 108 via a file write event is encrypted, and is thus an encrypted archive file 104. For instance, the security agent 102 may verify that a file generated via a file write event is encrypted, and is therefore an encrypted archive file 104, by examining a file type or other metadata associated with the generated file that identifies the generated file as the encrypted archive file 104, by attempting to open the generated file and determining that a password is needed to open or decrypt the file, by determining that an entropy level of the generated file is indicative of the generated file being encrypted, and/or via other techniques. In some examples, the security agent 102 may verify that the generated file is encrypted while a file write event associated with the generated file is paused. In other examples, the security agent 102 may verify that the generated file is encrypted after the file write event associated with the generated file has resumed and has completed.

If the security agent 102 determines that a file generated by the encryption process 108 is encrypted, the security agent 102 may confirm that the generated file is an encrypted archive file 104, and may generate and/or maintain corresponding archive content data 122 associated with the encrypted archive file 104. However, if the security agent 102 determines that a file generated by the encryption process 108 is not encrypted, the security agent 102 may determine that the generated file is not an encrypted archive file 104, and may delete any archive content data 122 that had been generated or collected about the generated file.

As an example, when the security agent 102 determines that the encryption process 108 has begun executing, the security agent 102 may generate a file list 124 that identifies files 110 accessed by the encryption process 108. If the security agent 102 later determines that a file generated by the encryption process 108 is encrypted and is thus an encrypted archive file 104, the security agent 102 may generate corresponding file copies 126 and/or content metadata 128, or may maintain corresponding file copies 126 and/or content metadata 128 if the security agent 102 has already generated such archive content data 122. However, if the security agent 102 determines that the file generated by the encryption process 108 is not encrypted and is thus not an encrypted archive file 104, the security agent 102 may delete the corresponding file list 124, and may avoid generating corresponding file copies 126 and content metadata 128 or may delete corresponding file copies 126 and/or content metadata 128 if the security agent 102 has already generated such archive content data 122.

In some examples, the security agent 102 may be associated with, and may communicate with, a security network 130. The security network 130 may include remote servers, cloud computing elements, and/or other elements that may communicate with the security agent 102 on the computing system 106, security agents on other computing systems, and/or other elements. The security agent 102 may communicate with the security network 130 via the Internet or another data connection.

Elements of the security network 130 may provide configuration data to the security agent 102, for instance via the Internet or another data connection. Such configuration data may define events to be detected by the security agent 102, define one or more policies to be enforced by the policy enforcer 118, define information about known encryption processes 108 that allows the encryption monitor 120 to determine when one of those known encryption processes 108 executes on the computing system 106, define types of archive content data 122 to be generated and stored by the security agent 102, and/or define other information that configures one or more elements of the security agent 102.

The security agent 102 may also be configured to transmit event data 132 to the security network 130, for instance via the Internet or another data connection. The event data 132 may indicate information about events that have occurred on the computing system 106 and have been detected by the security agent 102. In some examples, when the security agent 102 determines that the encryption process 108 has generated an encrypted archive file 104, the security agent 102 may be configured to send event data 132 that indicates, to the security network 130, that the encrypted archive file 104 has been generated on the computing system 106.

The event data 132 associated with generation of the encrypted archive file 104 may also include one or more types of corresponding archive content data 122 that has been determined and/or generated by the security agent 102. As a non-limiting example, the event data 132 transmitted to the security network 130 in association with the generation of the encrypted archive file 104 may include the file list 124 that identifies files 110 likely to have been included in the encrypted archive file 104, and the content metadata 128 identifying attributes of the contents of those files 110.

In some examples, the event data 132 sent to the security network 130 may omit file copies 126 that correspond to the encrypted archive file 104, but may include the content metadata 128 indicating attributes of the contents of the encrypted archive file 104. For instance, the event data 132 may include content metadata 128 that identifies what types of sensitive data are likely included within the encrypted archive file 104, but may omit the file copies 126 that indicate specific instances of sensitive data. However, in other examples, the event data 132 may also or alternately include the file copies 126.

After the encrypted archive file 104 has been generated and the security agent 102 has generated corresponding archive content data 122, the security agent 102 may monitor for events on the computing system 106 that are associated with the encrypted archive file 104. For example, as discussed above, the policy enforcer 118 may be configured to enforce one or more policies, such as policies designed to prevent and/or log exfiltration of one or more types of sensitive data. Accordingly, if the security agent 102 detects an event associated with the encrypted archive file 104, such as an operation of the file transfer process 116 that may be attempting to transfer the encrypted archive file 104 or any other operation indicating that the encrypted archive file 104 is being opened, copied, moved, or otherwise accessed, the policy enforcer 118 may determine whether the event corresponds to one of the policies being enforced by the policy enforcer 118.

Because the encrypted archive file 104 is encrypted, and the security agent 102 may not be able to decrypt the encrypted archive file 104 as discussed above. However, the policy enforcer 118 may use the previously-determined archive content data 122 associated with the encrypted archive file 104 to determine whether the contents of the encrypted archive file 104 correspond with a policy being enforced by the policy enforcer 118.

As a non-limiting example, the policy enforcer 118 may be configured to enforce a policy indicating that a particular type of sensitive data should not be transferred away from the computing system 106. If the file transfer process 116 begins an attempt to transfer the encrypted archive file 104 away from the computing system 106, the policy enforcer 118 may evaluate the encrypted archive file 104 to determine whether the encrypted archive file 104 contains the particular type of sensitive data identified by the policy. Rather than attempting to decrypt the encrypted archive file 104 in an attempt to determine whether the encrypted archive file 104 contains any instances of the particular type of sensitive data identified by the policy, the policy enforcer 118 may use previously-generated archive content data 122 associated with the encrypted archive file 104, such as file copies 126 and/or content metadata 128, to determine whether the encrypted archive file 104 contains any instances of the particular type of sensitive data identified by the policy.

If the policy enforcer 118 determines, using the archive content data 122 that corresponds to the encrypted archive file 104, that the encrypted archive file 104 contains contents that correspond with a policy, the security agent 102 may perform one or more responsive actions defined by that policy. As an example, if the policy indicates that transfer of a file containing a particular type of sensitive data should be blocked, and the archive content data 122 indicates that the encrypted archive file 104 does contain instances of that particular type of sensitive data, the security agent 102 may block the file transfer process 116 and/or other elements from transferring the encrypted archive file 104 away from the computing system 106. As another example, if the policy indicates that transfer of a file containing a particular type of sensitive data may be allowed but should be logged, and the archive content data 122 indicates that the encrypted archive file 104 does contain instances of that particular type of sensitive data, the security agent 102 may allow the encrypted archive file 104 to be transferred away from the computing system 106, but may log information about the file transfer such as a time of the file transfer, a destination to which the encrypted archive file 104 was transferred, one or more other processes 112 or other elements associated with the file transfer, and/or other information about the file transfer.

In some example, responsive actions performed by the security agent 102 in response to determining, based on the archive content data 122, that the encrypted archive file 104 corresponds to a policy being enforced by the policy enforcer 118 may include sending corresponding event data 132 to the security network 130. As an example, if the security agent 102 blocks the file transfer process 116 from transferring the encrypted archive file 104 away from the computing system 106 because the archive content data 122 indicates that the encrypted archive file 104 is likely to contain sensitive data that corresponds to a policy enforced by the policy enforcer 118, the security agent 102 may transmit corresponding event data 132 to the security network 130 that identifies that an attempt was made to transfer the encrypted archive file 104, information indicating that the file transfer was blocked, information indicating why the file transfer was blocked, and/or other information. As another example, if the security agent 102 allows the transfer of the encrypted archive file 104 but logs information about the file transfer because the because the archive content data 122 indicates that the encrypted archive file 104 likely contained data that corresponds to a policy enforced by the policy enforcer 118, the security agent 102 may transmit corresponding event data 132 to the security network 130 indicating that the file transfer was allowed, indicating the destination to which the encrypted archive file 104 was transferred, indicating the types of content likely to have been within the encrypted archive file 104, and/or indicating other information about the file transfer and/or the contents of the encrypted archive file 104.

Overall, the security agent 102 may generate archive content data 122, indicating contents of an encrypted archive file 104, during the initial generation of the encrypted archive file 104. Thereafter, the security agent 102 may apply security policies to operations involving the encrypted archive file 104 based on that earlier-determined archive content data 122, instead of decrypting the encrypted archive file 104 to identify the contents of the encrypted archive file 104.

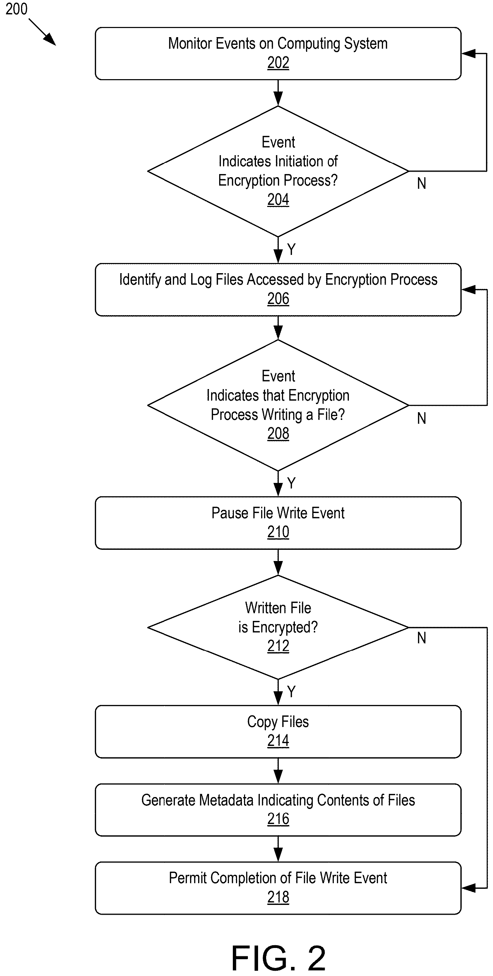

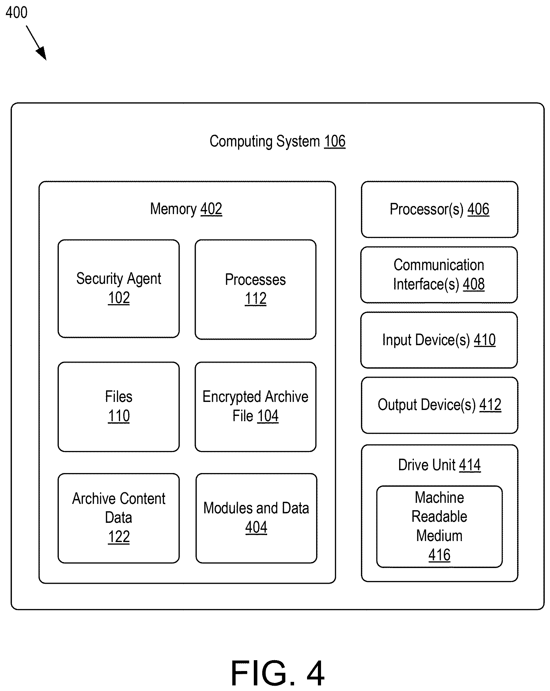

FIG. 2 shows a flowchart of an example process 200 for determining archive content data 122 associated with an encrypted archive file 104. The example process 200 shown in FIG. 2 may be performed by the security agent 102 executed by the computing system 106. An example system architecture for the computing system 106 that executes the security agent 102 is shown and described with respect to FIG. 4.

At block 202, the security agent 102 may monitor events that occur on the computing system 106. For example, the security agent 102 may hook into, and/or have visibility into, operating system activities, file system activities, and/or other types of activities on the computing system 106. Accordingly, the security agent 102 may detect the occurrence of events on the computing system 106.

At block 204, the security agent 102 may determine whether an event monitored at block 202 indicates that an encryption process 108 has been initiated on the computing system 106. The encryption monitor 120 of the security agent 102 may be configured with information associated with a set of known encryption processes 108 that may potentially be executed on the computing system 106. For instance, the encryption monitor 120 may be configured with predefined information indicating filenames, program names, program folders, drivers, registry entries, and/or other information that are associated with the set of known encryption processes 108. If an event monitored at block 202 is associated with a filename, program name, program folder, driver, registry entry, and/or other information that the encryption monitor 120 has been configured to associate with one of the known encryption processes 108, the security agent 102 may determine that that encryption process 108 has been initiated on the computing system 106.

If the security agent 102 does not determine that an encryption process 108 has been initiated on the computing system 106 (Block 204 - No), the security agent 102 may continue to monitor events at Block 202. However, if the security agent 102 does determine that an encryption process 108 has been initiated on the computing system 106 (Block 204 - Yes), the security agent 102 may identify and log files 110 that are accessed by the encryption process 108 at block 206.

For example, at block 206, the encryption monitor 120 of the security agent 102 may monitor file read events on the computing system 106 to identify one or more files 110 in the file storage 114 that are accessed by the encryption process 108. The security agent 102 may hook into operating system elements, file system elements, and/or other elements of the computing system 106 that indicate when the encryption process 108 accesses a file 110, that indicate the identity of a file 110 accessed by the encryption process 108, and/or other information about a file 110 accessed by the encryption process 108. The security agent 102 may also log the files 110 that are accessed by the encryption process 108 by adding information about those files to a file list 124.

At block 208, the security agent 102 may determine whether an event that has occurred on the computing system 106 indicates that the encryption process 108 is writing a file 110 that may be an encrypted archive file 104. For example, at block 208 the security agent 102 may determine whether the event indicates that the encryption process 108 is attempting to perform a file write event after accessing one or more files 110 identified at block 206. If such a file write event is being performed after the encryption process 108 accessed one or more files 110, the file write event may be for an encrypted archive file 104 that includes those accessed files 110. If the security agent 102 does not determine that the encryption process 108 is writing a file 110 (Block 208 - No), the security agent 102 may continue to identify and log files 110 that are accessed by the encryption process 108 at block 206.

If the security agent 102 does determine that the encryption process 108 is writing a file 110 (Block 208 - Yes), the security agent 102 may pause the file write event at block 210. For example, the security agent 102 may cause operating system elements, file system elements, or other elements on the computing system 106 to temporarily pause the file write event, such that a UI of the encryption process 108 or an operating system may indicate that the file write event is still occurring and/or that the file 110 being written is not yet ready to be used or accessed.

At block 212, the security agent 102 may determine whether the file 110 written by the encryption process 108 is encrypted, and is thus an encrypted archive file 104. For instance, although the file write event may be paused, the file 110 may be at least temporarily written and stored in the file storage 114. Accordingly, the security agent 102 may access the file 110, and may determine whether the file 110 is encrypted by examining a file type or other metadata associated with the file 110 that indicates that the file 110 is encrypted, by attempting to open the file 110 and determining that a password is needed to open or decrypt the file 110, by determining that an entropy level of the file 110 is indicative of the file 110 being encrypted, and/or via other techniques. If the security agent 102 determines that the file 110 is encrypted at block 212 (Block 212 - Yes), the security agent 102 may determine that the file 110 is an encrypted archive file 104.

At block 214, the security agent 102 may copy the files 110, identified at block 206 as having been accessed by the encryption process 108, to generate corresponding file copies 126 of those files 110. For example, while the file write event is paused, the security agent 102 may generate file copies 126 by making copies of the original files 110 that were accessed by the encryption process 108, and storing those copies in a TEE or other memory location associated with the security agent 102.

At block 216, the security agent 102 may generate content metadata 128 that indicates attributes of content of the files 110 that were identified at block 206 as having been accessed by the encryption process 108. For example, the security agent 102 may generate content metadata 128 that indicates names of the files 110, filetypes of the files 110, types of sensitive data and/or other types of content expressed within the files 110, origins of the files 110, a number of the files 110, and/or other types of metadata about the content of the files 110. In some examples, the security agent 102 may generate the content metadata 128 by examining the original files 110 within the file storage 114. In other examples, the security agent 102 may generate the content metadata 128 by examining file copies 126, generated at block 214, that correspond to the original files 110 accessed by the encryption process 108.

At block 218, the security agent 102 may permit the file write event, paused at block 210, to complete on the computing system 106. For example, the security agent 102 may cause operating system elements, file system elements, or other elements on the computing system 106 to release the pause on the file write event that was initiated at block 210, such that the file write event may be completed and the encryption process 108 and/or an operating system of the computing system 106 may indicate that the written file 110 has been generated and/or is usable.

Although FIG. 2 depicts one order of operations performed by the security agent 102, the security agent 102 may perform operations in a different order than is shown in FIG. 2. In some examples, the security agent 102 may perform one or more of block 212, block 214, and block 216 during a period of time when the file write event is paused, as shown in FIG. 2. For instance, while the file write event is paused, the security agent 102 may verify at block 212 that the written file 110 is encrypted and is therefore likely to be an encrypted archive file 104 (Block 212 - Yes), and may copy files 110 and/or generate corresponding content metadata 128 at blocks 214 and/or 216 before permitting the file write event to complete at block 218. However, in other examples, the security agent 102 may copy files 110 at block 214 while the file write event is paused, but may use the original files 110 and/or the corresponding file copies 126 to generate corresponding content metadata 128 at block 216 after the file write event is permitted to complete at block 218.

In some examples, the security agent 102 may skip block 214 and/or block 216 if the security agent 102 determines at block 212 that the written file 110 is not encrypted and is therefore not likely to be an encrypted archive file 104 (Block 212 - No), as shown in FIG. 2. In these examples, the security agent 102 may avoid copying files 110 and generating content metadata 128. Additionally, if the file write event had been paused at block 210, and the security agent 102 determines at block 212 that the written file 110 is not encrypted and is therefore not likely to be an encrypted archive file 104 (Block 212 - No), the security agent 102 may permit the file write event to complete at block 218.

In other examples, the security agent 102 may copy files 110 at block 214 and/or generate corresponding content metadata 128 at block 214 after identifying and/or pausing a file write event at block 208 and/or block 210. The security agent 102 may thereafter determine whether the written file 110 is encrypted at block 212. If the security agent 102 determines that the written file 110 is encrypted and is likely to be an encrypted archive file 104, the security agent 102 may maintain the already-generated file copies 126 and/or the already-generated content metadata 128, or may proceed with generating content metadata 128 based on the original files 110 and/or the file copies 126. However, if the security agent 102 determines that the written file 110 is not encrypted and is not likely to be an encrypted archive file 104, the security agent 102 may delete any already-generated file copies 126 and/or any already-generated content metadata 128.

Overall, as discussed above, when the security agent 102 determines that the encryption process 108 has been initiated and is accessing files 110, the security agent 102 may use a file list 124 to track which files 110 the encryption process 108 is accessing, may generate file copies 126 of those files 110, and may generate corresponding content metadata 128. The security agent 102 may store the file list 124, the file copies 126, and/or the content metadata 128 as archive content data 122 associated with the file 110 generated by the encryption process 108. In some examples, the security agent 102 may also provide event data 132, associated with the generation of the encrypted archive file 104, to the security network 130. For instance, the event data 132 may indicate to the security network 130 that the encryption process 108 has generated an encrypted archive file 104, and may include content metadata 128 indicating attributes of the likely content of the encrypted archive file 104.

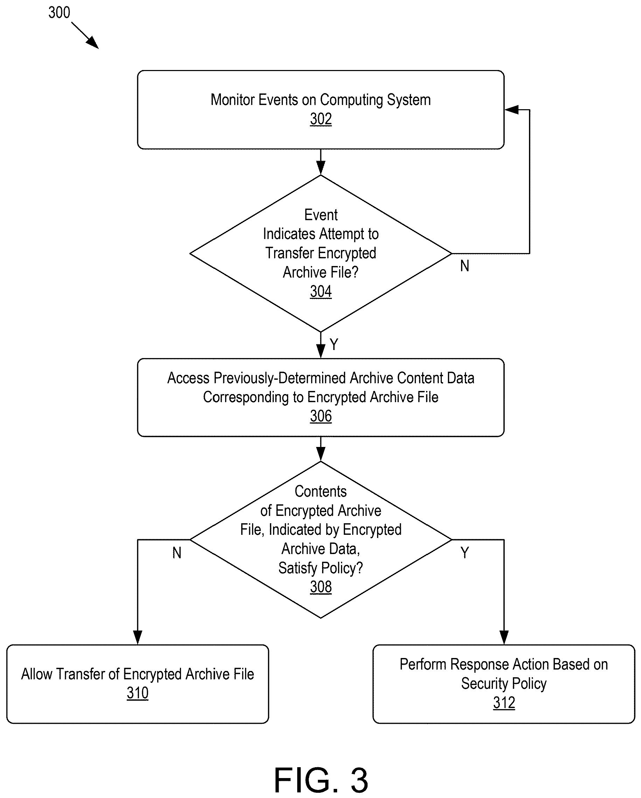

Additionally, if the security agent 102 determines that the file 110 generated by the encryption process 108 is encrypted and is likely to be an encrypted archive file 104, the security agent 102 may maintain the archive content data 122 associated with the encrypted archive file 104. The security agent 102 may thereafter use the archive content data 122 associated with the encrypted archive file 104 to determine contents of the encrypted archive file 104, without decrypting the encrypted archive file 104, as discussed further below with respect to FIG. 3.

FIG. 3 shows a flowchart of an example process 300 for applying a policy to an encrypted archive file 104 via the security agent 102. The example process 300 shown in FIG. 3 may be performed by the security agent 102 executed by the computing system 106. An example system architecture for the computing system 106 that executes the security agent 102 is shown and described with respect to FIG. 4.

At block 302, the security agent 102 may monitor events that occur on the computing system 106. For example, the security agent 102 may hook into, and/or have visibility into, operating system activities, file system activities, and/or other types of activities on the computing system 106. Accordingly, the security agent 102 may detect the occurrence of events on the computing system 106.

At block 304, the security agent 102 may determine whether an event monitored at block 302 indicates an attempt to transfer a file 110 that the security agent 102 has identified as being an encrypted archive file 104. For example, the security agent 102 may have used the process shown in FIG. 2 to determine that a file 110 generated by a encryption process 108 is encrypted and is likely to be an encrypted archive file 104. The security agent 102 may accordingly determine whether a file transfer process 116 or other element is attempting to transfer a file 110 that the security agent 102 has previously identified as likely being an encrypted archive file 104.

If the security agent 102 determines at block 304 that monitored events do not indicate that an attempt is being made to transfer an encrypted archive file 104 (Block 304 - No), the security agent 102 may continue monitoring events on the computing system 106 at block 302. As an example, if no attempt is being made to transfer a file 110, the security agent 102 may continue monitoring events on the computing system 106. As another example, if an attempt is being made to transfer a file 110, but that file 110 is not an encrypted archive file 104, the security agent 102 may apply one or more policies to determine whether transfer of the non-encrypted file 110 should be permitted, and may also continue monitoring for an event associated with an attempt to transfer an encrypted archive file 104.

If the security agent 102 determines at block 304 that monitored events do indicate that an attempt is being made to transfer an encrypted archive file 104 (Block 304 - Yes), the security agent 102 may access previously-determined archive content data 122 associated with that encrypted archive file 104 at block 306. For example, the security agent 102 may have used the process shown in FIG. 2 to determine that a file 110 generated by a encryption process 108 is encrypted and is likely to be an encrypted archive file 104, and accordingly may previously have generated archive content data 122 that corresponds with the encrypted archive file 104. The security agent 102 may have maintained the archive content data 122 associated with the encrypted archive file 104 in a TEE or other memory location associated with the security agent 102, separate from file storage 114 accessible to other processes 112. The archive content data 122 may include one or more of a file list 124 identifying files 110 that the encryption process 108 accessed while generating the encrypted archive file 104 and that are likely to have been included within the encrypted archive file 104, file copies 126 of those files 110, and content metadata 128 indicating attributes of contents of those files 110. Accordingly, the archive content data 122 may indicate the content of the encrypted archive file 104, such as actual instances of content included in the encrypted archive file 104, types of content included in the encrypted archive file 104, and/or other information about the content of the encrypted archive file 104.

At block 308, the security agent 102 may determine whether the archive content data 122 associated with the encrypted archive file 104, accessed at block 306, indicates that content of the encrypted archive file encrypted archive file 104 satisfies a policy the security agent 102 is configured to apply to a file transfer operation. For example, the policy enforcer 118 may be configured with one or more policies that cause the security agent 102 to block or log transfer of files 110 containing certain types of sensitive data. Accordingly, if the archive content data 122 associated with the encrypted archive file 104 indicates that the encrypted archive file 104 likely contains sensitive data that corresponds with a particular policy being applied by the policy enforcer 118, the security agent 102 may enforce that policy in association with the encrypted archive file 104 without decrypting, or attempting to decrypt, the encrypted archive file 104.

If the security agent 102 determines, based on the archive content data 122, that content of the encrypted archive file 104 does not satisfy a policy being enforced by the security agent 102 (Block 308 - No), the security agent 102 may permit the transfer of the encrypted archive file 104 at block 310. For example, if the security agent 102 is configured to apply policies designed to prevent exfiltration of one or more types of sensitive data, but the archive content data 122 indicates that the encrypted archive file 104 does not contain any of those types of sensitive data, the security agent 102 may allow transfer of the encrypted archive file 104 at block 310.

However, if the security agent 102 determines, based on the archive content data 122, that contents of the encrypted archive file 104 do satisfy a policy being enforced by the security agent 102 (Block 308 - Yes), the security agent 102 may perform one or more response actions based on that policy at block 312.

For example, if the security agent 102 is configured to apply policies designed to prevent exfiltration of one or more types of sensitive data, and the archive content data 122 indicates that the encrypted archive file 104 does or is likely to contain a type of sensitive data defined by one of the policies, the security agent 102 may perform one or more types of response actions defined by that policy at block 312.

As an example, if a policy indicates that transfer of the encrypted archive file 104 should be blocked because the archive content data 122 indicates that the encrypted archive file 104 contains one or more instances of a type of sensitive data defined by the policy, the security agent 102 may block the file transfer process 116 and/or other elements from transferring the encrypted archive file 104 away from the computing system 106. The security agent 102 may also send corresponding event data 132 to the security network 130 to indicate that that transfer of the encrypted archive file 104 was attempted but was blocked according to the policy.

As another example, if a policy indicates that transfer of the encrypted archive file 104 should be permitted, but that corresponding information about the file transfer should be logged because the archive content data 122 indicates that the encrypted archive file 104 contains one or more instances of a type of sensitive data defined by the policy, the security agent 102 may permit the file transfer process 116 but log information about the file transfer. For instance, the security agent 102 may log information indicating a time of the file transfer, a destination to which the encrypted archive file 104 was transferred, one or more other processes 112 or other elements associated with the file transfer, and/or other information about the file transfer. The security agent 102 may also send corresponding event data 132 to the security network 130 to indicate that the transfer of the encrypted archive file 104 has occurred, and/or that includes the logged information about the transfer of the encrypted archive file 104.

FIG. 4 shows an example system architecture 400 for the computing system 106 that executes the security agent 102. The computing system 106 may include one or more computers, servers, mobile computing devices, or other types of computing devices that may execute one or more elements described herein, such as the security agent 102, the encryption process 108, the file transfer process 116, and/or other processes 112. In some examples, the security network 130 may include one or more computing systems that have the system architecture 400 shown in FIG. 4, or a similar system architecture, such as computing systems that operate elements of the security network 130 and/or provide virtual computing resources for the security network 130.

The computing system 106 may include memory 402. In various examples, the memory 402 may include system memory, which may be volatile (such as RAM), non-volatile (such as ROM, flash memory, non-volatile memory express (NVMe), etc.) or some combination of the two. The memory 402 may further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which may be used to store desired information and which may be accessed by the computing system 106. Any such non-transitory computer-readable media may be part of the computing system 106.

The memory 402 may store data and/or computer-executable instructions, such as data and/or computer-executable instructions associated with software elements. For example, the memory 402 may store data and/or computer-executable instructions associated with the security agent 102, other processes 112 such as the encryption process 108 and the file transfer process 116, and/or other elements described herein. The memory 402 may also be, or include, the file storage 114 that stores files 110 and/or the encrypted archive file 104. The memory 402 may also store data generated and/or used by the security agent 102, such as the archive content data 122, in some examples in a separate partition or memory location that is not accessible by other processes 112 such as the encryption process 108 and the file transfer process 116.

The memory 402 may also store other modules and data 404 that may be utilized by the computing system 106 to perform or enable performing any action taken by the computing system 106. For example, the other modules and data 404 may include a platform, operating system, drivers, registry data, the processes 112, and/or other elements, as well as data utilized by such elements.

The computing system 106 may also have one or more processors 406. In various examples, each of the processors 406 may be a central processing unit (CPU), a graphics processing unit (GPU), both a CPU and a GPU, or any other type of processing unit. Each of the one or more processors 406 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processors 406 may also be responsible for executing computer applications stored in the memory 402, which may be associated with types of volatile and/or nonvolatile memory. For example, the processors 406 may access data and computer-executable instructions stored in the memory 402, and execute such computer-executable instructions.

The computing system 106 may also have one or more communication interfaces 408. The communication interfaces 408 may include transceivers, modems, interfaces, antennas, telephone connections, and/or other components that may transmit and/or receive data over networks, telephone lines, or other connections, or that may transfer data to or from removable storage media or other elements connected to the communication interfaces 408. For example, the communication interfaces 408 may include one or more network cards or other network interfaces that may be used to send event data 132 to the security network 130, or that may be used by the file transfer process 116 to transfer files 110 and/or the encrypted archive file 104 to other computing systems, connected storage devices, or other destinations via a network or local data connection if such file transfers are not blocked by the security agent 102.

In some examples, the computing system 106 may also have one or more input devices 410, such as a keyboard, a mouse, a touch-sensitive display, voice input device, etc., and/or one or more output devices 412 such as a display, speakers, a printer, etc. These devices are well known in the art and need not be discussed at length here.

The computing system 106 may also include a drive unit 414 including a machine readable medium 416. The machine readable medium 416 may store one or more sets of instructions, such as software or firmware, that embodies any one or more of the methodologies or functions described herein. The instructions may also reside, completely or at least partially, within the memory 402, processor(s) 406, and/or communication interface(s) 408 during execution thereof by the computing system 106. The memory 402 and the processor(s) 406 also may constitute machine readable media 416.

Although the subject matter has been described in language specific to structural features and/or methodological acts, it is to be understood that the subject matter is not necessarily limited to the specific features or acts described above. Rather, the specific features and acts described above are disclosed as example embodiments.

## Claims

1. A computer-implemented method, comprising:
determining, by a security agent executing on a computing system, that an encryption process has been initiated on the computing system, the encryption process being configured to generate an encrypted archive file containing one or more files;
identifying, by the security agent, the one or more files accessed by the encryption process during generation of the encrypted archive file; and
generating, by the security agent, archive content data corresponding to the encrypted archive file, wherein the archive content data indicates content of the one or more files accessed by the encryption process during the generation of the encrypted archive file.

2. The computer-implemented method of claim 1, further comprising:
identifying, by the security agent, a file write event indicating that the encryption process is writing the encrypted archive file after accessing the one or more files;
causing, by the security agent, a pause in the file write event on the computing system;
generating, by the security agent, at least a portion of the archive content data during the pause in the file write event; and
releasing, by the security agent, the pause in the file write event.

3. The computer-implemented method of claim 1 or 2, wherein generating the archive content data comprises generating content metadata indicating one or more attributes of types of content of the one or more files.

4. The computer-implemented method of claim 1 or 2, wherein generating the archive content data comprises copying the one or more files to a memory location associated with the security agent.

5. The computer-implemented method of any preceding claim, further comprising:
verifying, by the security agent, that a file generated by the encryption process is encrypted and is likely to be the encrypted archive file,
wherein the security agent generates or maintains the archive content data in response to verifying that the file is encrypted and is likely to be the encrypted archive file.

6. The computer-implemented method of any preceding claim, further comprising:
sending, by the security agent, event data to a security network,
wherein the event data comprises at least one of:
an indication that the encrypted archive file has been generated on the computing system, or
at least a portion of the archive content data associated with the encrypted archive file.

7. The computer-implemented method of any preceding claim, wherein the security agent is configured to apply at least one policy in association with the encrypted archive file based on the content indicated by the archive content data corresponding to the encrypted archive file, and without decrypting the encrypted archive file.

8. The computer-implemented method of claim 7, further comprising applying the at least one policy by:
determining, based on the archive content data, that the encrypted archive file contains a type of sensitive data that is defined by the at least one policy; and
applying at least one response action based on the at least one policy.

9. The computer-implemented method of claim 8, wherein the at least one response action comprises blocking a transfer of the encrypted archive file away from the computing system.

10. The computer-implemented method of claim 8, wherein the at least one response action comprises permitting a transfer of the encrypted archive file away from the computing system and logging information about the transfer.

11. A computing system, comprising:
one or more processors; and
memory storing computer-executable instructions associated with a security agent that, when executed by the one or more processors, cause the security agent to carry out the method of any preceding claim.

12. A computer program associated with a security agent that, when executed by one or more processors of a computing system, cause the security agent to carry out the method of any one of claims 1 to 10.
